# EUROPEAN PATENT SPECIFICATION

(11) **EP 1 049 883 B1**
(45) Date of publication and mention of the grant of the patent: **02.04.2003**
(21) Application number: 98955285.6
(22) Date of filing: 26.11.1998
(51) Int. Cl.: F16D 41/08, F16D 15/00

(54) **SPIRAL-TYPE COUPLING**
SPIRALFÖRMIGE KUPPLUNG
MANCHON DE TYPE EN SPIRALE

(30) Priority: 26.11.1997 US 66666 P
(43) Date of publication of application: 08.11.2000
(73) Proprietor: Kerr, John Hugh, Kingston, Ontario K7L 4V1 (CA)
(72) Inventor: Kerr, John Hugh, Kingston, Ontario K7L 4V1 (CA)
(74) Representative: Grünecker, Kinkeldey, Stockmair & Schwanhäusser Anwaltssozietät
(86) International application number: PCT/CA98/01071
(87) International publication number: WO 99/028644

(56) References cited:
- EP-A- 0 015 674
- EP-A- 0 807 561
- GB-A- 271 338
- US-A- 2 085 606
- US-A- 4 597 467

## Description

### FIELD OF THE INVENTION

The present invention relates to a coupling for selectively transferring torque from a torque input member to a torque output member. In particular, the present invention relates to a programmable coupling having a plurality of operating modes for selectively transferring torque between a clutch housing and a race.

### BACKGROUND OF THE INVENTION

One-way clutches and couplings are widely used in the automotive industry for transferring torque between an input shaft and an output shaft when the input shaft is rotating in one direction relative to the output shaft and for allowing the input shaft to freewheel in the opposite direction. As a result, one-way clutches have been used in torque converters and automatic transmissions to allow an input member to drive an driven member while allowing freewheeling to occur between the input member and the driven member when necessary. Examples of such one-way or overrunning clutches presently in use include sprag clutches and roller-ramp clutches.

The sprag clutch generally comprises an outer race, an inner race, and a plurality of wedge-like elements disposed between the inner and outer race. The geometry of the sprag element is such that it allows the clutch to freewheel in one direction, but becomes wedged between the inner and outer race to lock up the clutch in the opposite direction. The rollerramp clutch is similar to the sprag clutch but includes a plurality of roller elements in replacement of the sprag elements. Since both devices rely on a wedging action to lock up, the sprag elements, roller elements and races are subjected to extremely high radial stresses during lock up. Further, the sprag and roller elements subject the clutch to vibrations while freewheeling. As a result, such one-way clutches are prone to frequent failure.

Spiral-type one-way clutches have been developed as an improvement over sprag and roller-ramp clutches. State of the art spiral-type one-way clutch comprise an outer member having an inner spiral race, an inner member having an outer sprial race congruent with the inner spiral race, and a plurality of elongate roller bearings disposed between the inner and outer race. The elongate roller bearings reduce the frictional resistance to the differential rotation of the spiral surfaces while providing an even distriburtion of compression forces on the roller bearings and races. Such a coupling is known from EP-A-0015674. It comprises a tubular member including a first tubular surface; a resilient tubular slipper coaxial to the tubular member and including a first tubular friction surface; a second tubular surface opposite the first tubular friction surface which, together with the first tubular surface, defines a channel disposed between the tubular member and the slipper; a plurality of roller elements disposed in the channel for allowing limited rotational movement between the tubular memeber and the slipper; a race including a second tubular friction surface disposed adjacent the first tubular friction surface; and an actuator for selectively engaging the second tubular friction surface with the first tubular friction surface. However, as conventional spiral-type one way clutches, and one-way clutches in general, only have a single mode of operation, namely lock up in one direction and freeewheeling in the opposite direction, the design of automotive equipment using such clutches is unnecessarily over complicated. Accordingly, it would be desirable to provide a coupling having multiple modes of operation without drastically increasing the cost of the coupling.

### SUMMARY OF THE INVENTION

It is an object of the present invention to overcome or reduce the problems associated with the prior art one-way clutches by providing a spiral-type coupling having multiple modes of operation.

The spiral-type coupling, according to the invention comprises a tubular slipper including a pair of adjacent end walls extending between the first tubular friction surface and the second tubular surface along the length of the slipper for allowing the diameter of the slipper to vary in accordance with the position of the actuator.

The first tubular surface comprises at least one clockwise-oriented spiral surface and at least one counterclockwiese-oriented spiral surface. The second tubular surface is substantially congruent with the first tubular surface. Preferably, the sprial surfaces are involute spiral surfaces so that the first tubular surface and the second tubular surface remain parallel to each other as the slipper is rotated relative to the tubular member.

In one embodiment ob the invention, the slippler comprises a plurality of slipper segments, and the actuator comprises a single actuator ring which engages the slipper segments for selecting between a first mode in which the race freewheels in both directions relative to the tubular member, and a second mode in which the race is locked in both directions to the tubular member.

In another embodiment of the invention, the slipper comprises a plurality of slipper segments, and the actuator comprises a pair of actuator rings which engage alternate slipper segments for selecting between a first mode in which the race freewheels in both directions relative to the tubular member, a second mode in which the race is locked in both directions to the tubular member, a third mode in which the race freewheels in the clockwise direction but is locked to the tubular member in the counterclockwise direction, and a fourth mode in which the race freewheels in the counterclockwise direction but is locked to the tubular member in the counterclockwise direction.

### BRIEF DESCRIPTION OF THE DRAWINGS

The invention will now be described, by way of example only, with reference to the drawings, in which like reference numerals indicate like elements, and in which:
Fig. 1a is an axial cross-sectional view of a spiral-type dual-mode coupling according to a first embodiment of the invention, utilizing a full internal slipper and a cone race activator;
Fig. 1b is a transverse cross-sectional view of the spiral-type dual-mode coupling shown in Fig. 1a;
Fig. 2 is a transverse cross-sectional view of one variation of the spiral-type dual-mode coupling shown in Figs. 1a and 1b, utilizing a segmented internal slipper and cone race activator;
Fig. 3a is an axial cross-sectional view of a second variation of the spiral-type dual-mode coupling shown in Figs. 1a and 1b, utilizing a full external slipper and ring activator;
Fig. 3b is a transverse cross-sectional view of the spiral-type dual-mode coupling shown in Fig. 3a;
Fig. 4a is an axial cross-sectional view of a spiral-type quad-mode coupling according to a second embodiment of the invention, utilizing a segmented internal slipper and dual opposed ring activators;
Fig. 4b is a transverse cross-sectional view of the spiral-type quad-mode coupling shown in Fig. 4a;
Fig. 4c is a perspective view of the spiral-type quad-mode coupling shown in Fig. 4a;
Fig. 5a is an axial cross-sectional view of a variation of the spiral-type quad-mode coupling shown in Fig. 4, utilizing a segmented internal slipper and dual coplanar ring activators;
Fig. 5b is a transverse cross-sectional view of the spiral-type quad-mode coupling shown in Fig. 5a;
Fig. 5c is an exploded view of the spiral-type quad-mode coupling shown in Fig. 5a;
Fig. 6a is an axial cross-sectional view of a spiral-type tri-mode coupling according to a third embodiment of the invention, utilizing a cam plate actuator for switching modes;
Fig. 6b is a plan view of the cam plate shown in Fig. 6a; and

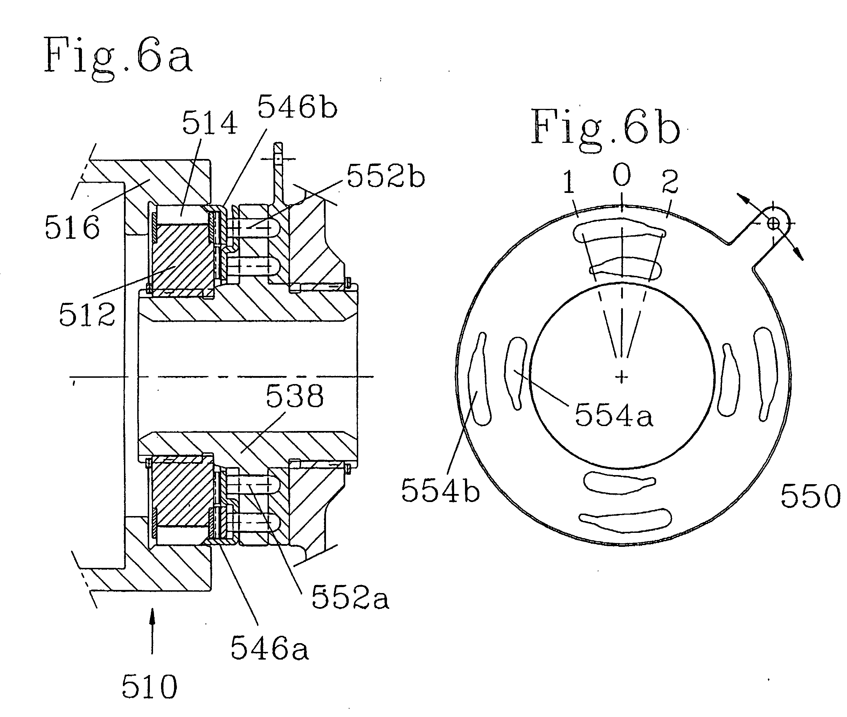

Fig. 6b is a plan view of the cam plate shown in Fig. 6a;

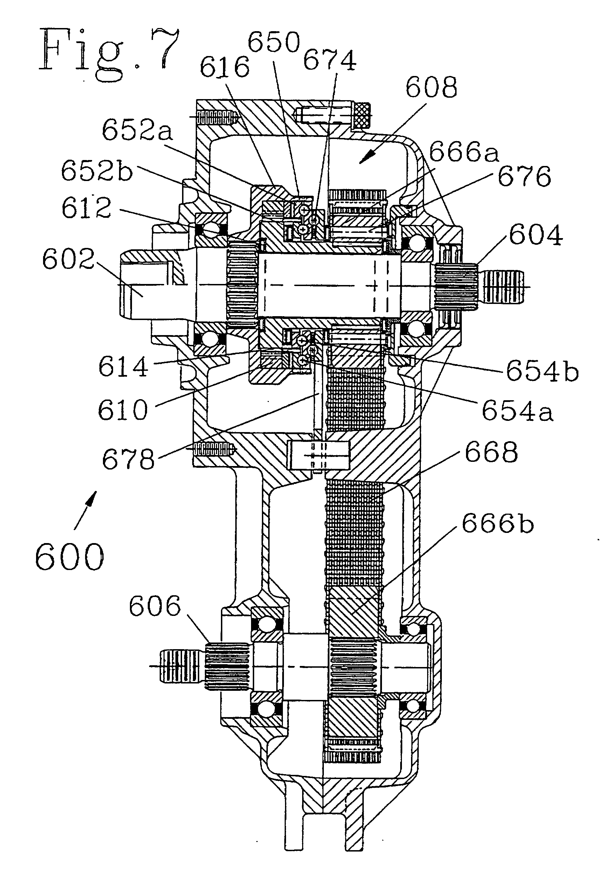

Fig. 7 is an axial cross-sectional view of a four wheel drive transfer case, utilizing a variation of the cam plate actuator shown in Fig. 6; and

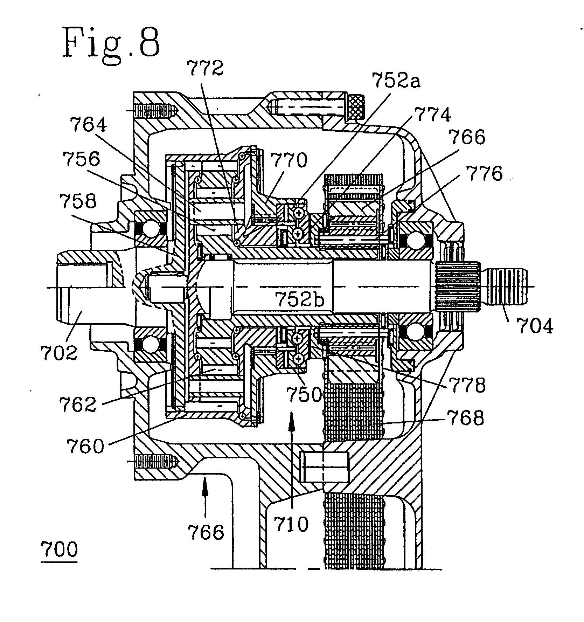

Fig. 8 is an axial cross-sectional view of an all wheel drive transfer case, utilizing a variation of the cam plate actuator shown in Fig. 6.

### DETAILED DESCRIPTION OF THE PREFERRED EMBODIMENT

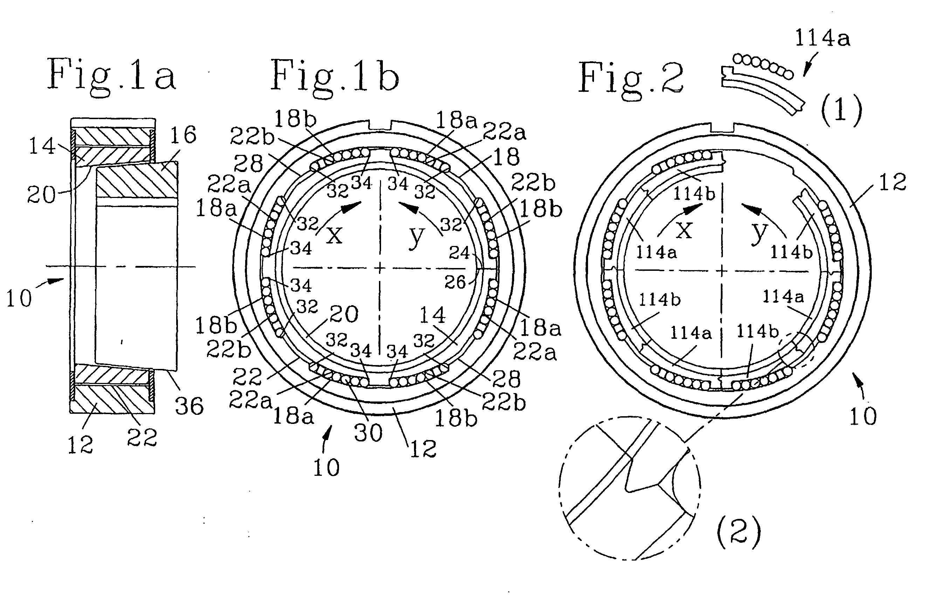

Turning to Figs. 1a and 1b, a dual-mode spiral-type coupling, denoted generally as 10, is shown comprising a tubular clutch housing 12, a resilient tubular C-shaped slipper 14 coaxial to and disposed within the clutch housing 12, and a conical race 16 coaxial to and disposed within the slipper 14. The clutch housing 12 has an inner tubular surface 18 which includes a plurality of clockwise outwardly spiraling surface portions 18a, and a plurality of counterclockwise outwardly spiraling surface portions 18b. As shown in Fig. 1b, the spiraling surface portions 18a, 18b are disposed around the inner tubular surface 18 in a sequence of alternating clockwise spiraling surface portions 18a and counterclockwise spiraling surface portions 18b. As will be explained, the clockwise spiraling surface portions 18a and the counterclockwise spiraling surface portions 18b serve to selectively restrict rotational movement between the race 16 and the clutch housing 12 in both the clockwise and the counterclockwise directions. Accordingly, it will be appreciated that a sequence of spiraling surface portions 18a, 18b, other than that shown in Fig. 1b, may be adopted without departing from the scope of the invention.

The slipper 14 includes an inner conical friction surface 20, and an outer tubular surface 22. The slipper 14 is provided with a slit defined by a pair of adjacent end walls 24, 26 extending between the inner conical friction surface 20 and the outer tubular surface 22 axially along the length of the slipper 14 for allowing the slipper 14 to expand and contract in response to axial movement of the race 16. The outer tubular surface 22 is substantially congruent with the inner tubular surface 18 and includes a plurality of clockwise outwardly spiraling surface portions 22a, and a plurality of counterclockwise outwardly spiraling surface portions 22b. Preferably, the spiraling surface portions 18a, 18b, 22a, 22b are involute spirals so that as the slipper 14 rotates relative to the clutch housing 12, the inner tubular surface 18 remains parallel to the outer tubular surface 22. However, other spiral shapes may be adopted as the application demands.

The inner tubular surface 18 and the outer tubular surface 22 together define a counterclockwise-oriented and clockwise oriented channels 28 disposed between the clutch housing 12 and the slipper 14 extending the length of the clutch housing 12 and the slipper 14. A plurality of elongated roller bearings 30 are disposed within the channel 28 to provide restricted rotational movement between the slipper 14 and the clutch housing 12 in a manner to be described below. The clutch housing 12 is provided with a plurality of flanges 32 extending radially inwards from the inner tubular surface 18, and the slipper 14 is provided with a plurality of flanges 34 extending radially outwards from the outer tubular surface 22 for restricting radial movement of the roller bearings 30 along the channels 28 by separating the clockwise-oriented channels from the counterclockwise-oriented channels 28 and for reducing the locking and unlocking times of the coupling 10. However, it will be appreciated that in applications where rapid locking and unlocking times are not critical, the flanges 32, 34 may be eliminated.

The conical race 16 includes an outer conical friction surface 36 congruent with the inner conical friction surface 20. An actuator, not shown, is provided for moving the conical race 16 towards and away from the slipper 14 along a line coaxial to the centre of rotation of the slipper 14.

The two modes of operation of the coupling 10 will now be described. When the actuator is inactive and the conical race 16 is in the position shown in Fig. 1a, the frictional forces between the slipper 14 and the race 16 are sufficiently small such that the race 16 can be driven in either the clockwise direction or the counterclockwise direction. Therefore, in this position the coupling 10 is in the bi-directional freewheeling mode with the race 16 free to rotate in both directions.

When the actuator is active, the conical race 16 is driven towards the slipper 14 such that the outer conical frictional surface 36 engages the inner conical friction surface 20. Due to the resilient nature of the slipper 14 and the slit defined by the end walls 24, 26, the slipper 14 expands radially in response to the axial movement of the race 16, thereby increasing the radial force exerted by the slipper 14 against the race 16. If the race 16 is driven sufficiently deeply into the slipper 14 and then subsequently rotated in the clockwise direction, the clockwise outwardly spiraling surface portions 22a will rotate towards the clockwise outwardly spiraling surface portions 18a causing the width of the channel 28 between the spiral surface portions 18a, 22a to narrow and the inner conical friction surface 20 to be held with greater force against the outer conical friction surface 36. As the race 16 continues to rotate clockwise, the channel 28 will continue to narrow until the slipper 14 and the race 16 become locked to the clutch housing 12. At this point, the input torque from the race 16 is coupled to the clutch housing 12 causing the clutch housing 12 to rotate clockwise with the race 16. Alternately, if input torque is applied to the clutch housing 12 rather than to the race 16, and in the counterclockwise direction, the input torque from the clutch housing 12 would be coupled to the race 16 causing the race 16 to rotate counterclockwise with the clutch housing 12.

If the direction of rotation of the race 16 is reversed, the width of the channel 28 will initially increase, and then subsequently decrease as the counterclockwise outwardly spiraling surface portions 22b are driven towards the counterclockwise outwardly spiraling surface portions 18b. As above, as the race 16 continues to rotate counterclockwise, the channel 28 will continue to narrow until the slipper 14 and the race 16 become locked to the clutch housing 12. At this point, the input torque from the race 16 is coupled to the clutch housing 12 causing the clutch housing 12 to rotate counterclockwise with the race 16. Accordingly, in this mode, the coupling 10 is in the bi-directional full coupling mode with the race 16 coupled to the clutch housing 12 in both directions.

Turning now to Fig. 2, a dual-mode spiral-type coupling 110 is shown substantially identical to the spiral-type coupling 10 but with the C-shaped slipper 14 replaced with a segmented slipper 114. As shown therein, the slipper 114 comprises a plurality of slipper segments 114a, 114b interlocked through tongue and groove means. The slipper segments 114a include clockwise outwardly spiraling surface portions 122a, while the slipper segments 114b include counterclockwise outwardly spiraling surface portions 122b. As above, the inner tubular surface 18 of the clutch housing 12 includes a plurality of clockwise outwardly spiraling surface portions 18a, and a plurality of counterclockwise outwardly spiraling surface portions 18b, with the spiraling surface portions 122a, 122b being substantially congruent to the spiraling surface portions 18a, 18b. As shown in Fig. 2, the spiraling surface portions 122a, 122b are disposed around the inner tubular surface 18 in a sequence of alternating clockwise spiraling surface portions 122a and counterclockwise spiraling surface portions 122b. However, as discussed above, some other sequence of spiraling surface portions 122a, 112b may be adopted.

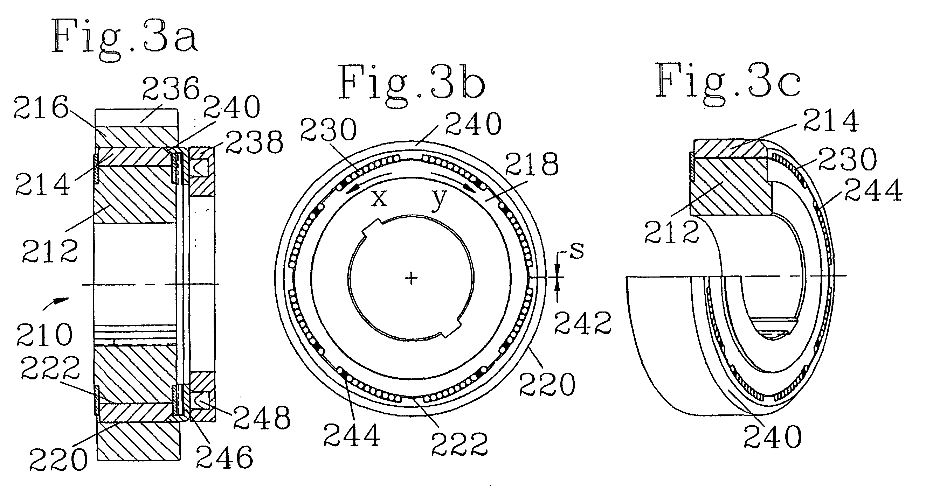

Figs. 3a, 3b and 3c show a variation of the dual-mode spiral-type coupling 10. The spiral-type coupling 210 shown therein comprises a tubular clutch housing 212, a resilient tubular C-shaped slipper 214 coaxial to and disposed externally to the clutch housing 212, a cylindrical race 216 coaxial to and disposed externally to the slipper 214, and an actuator 238 coupled to the slipper 214. The clutch housing 212 has an outer tubular surface 218 which includes a plurality of clockwise outwardly spiraling surface portions, and a plurality of counterclockwise outwardly spiraling surface portions.

The slipper 214 includes an outer cylindrical friction surface 220, and an inner tubular surface 222. The slipper 214 is provided with a chamfered edge 240, and a slit 242 extending between the outer cylindrical friction surface 220 and the inner tubular surface 222 axially along the length of the slipper 214. The inner tubular surface 222 is substantially congruent with the outer tubular surface 218 and includes a plurality of clockwise outwardly spiraling surface portions, and a plurality of counterclockwise outwardly spiraling surface portions. The cylindrical race 216 includes an inner cylindrical friction surface 236 congruent with the outer cylindrical friction surface 220.

The outer tubular surface 218 and the inner tubular surface 222 together define a channel disposed between the clutch housing 212 and the slipper 214 for receiving a plurality of roller bearings 230 and resilient elements 244 within the channel. As will be appreciated, the resilient elements 244 serve to soften the locking and unlocking action of the coupling 218 by maintaining parallel alignment of the roller bearings.

The actuator 238 comprises an actuator ring 246 for engaging the chamfered edge 240, and a piston 248 coupled to the actuator ring 246 for axially moving the actuator ring 246 towards and away from the slipper 214.

The two modes of operation of the coupling 210 will now be described. When the piston 248 is inactive, the inner friction surface 236 of the race 216 engages the outer frictional surface 220 of the slipper 214. As a result, clockwise and counterclockwise rotation of the race 216 causes the channel to narrow, as described above, until the race 216 becomes locked to the clutch housing 212. When the piston 248 is active, the actuator ring 246 engages the chamfered edge 240, causing the slipper 214 to move radially inwards away from the race 216. As a result, the race 216 becomes free to rotate in either direction about the clutch housing 212.

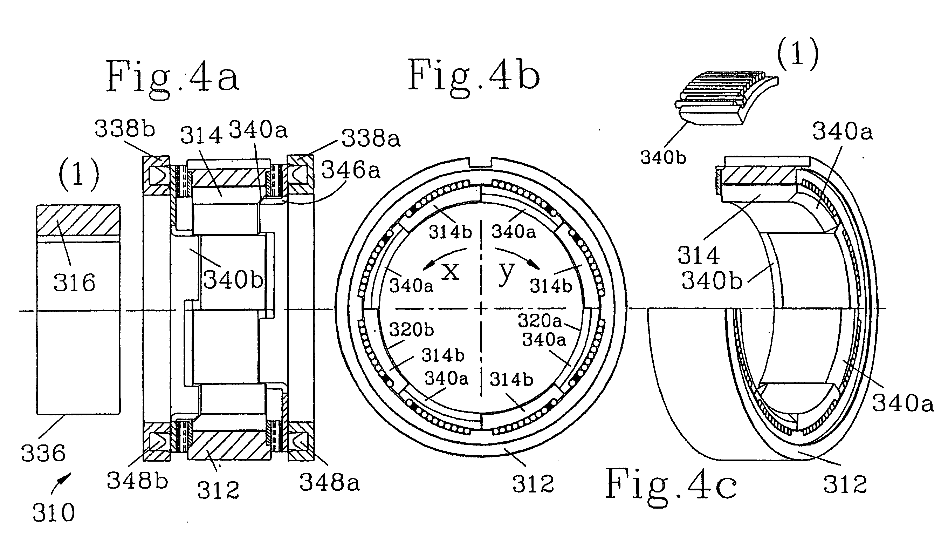

Turning now to Figs. 4a, 4b and 4c, a preferred quad-mode spiral-type coupling 310 is shown comprising a tubular outer clutch housing 312, a segmented inner slipper 314 coaxial to and disposed within the clutch housing 312, a cylindrical race 316 coaxial to and disposed within the slipper 314, and a pair of first and second actuators 338a, 338b coupled to opposite side edges of the slipper 314. The slipper 314 comprises a plurality of slipper segments 314a, 314b. Each slipper segment 314a includes a chamfered edge 340a, an inner frictional surface 320a and a clockwise spiraling surface portion, while each slipper segment 314b includes a chamfered edge 340b, an inner frictional surface 320b and counterclockwise spiraling surface portion. As shown in Fig. 4b, the slipper segments 314a, 314b are disposed around the inner tubular surface 318 of the clutch housing 312 in a sequence of alternating clockwise slipper segments 314a and counterclockwise slipper segments 314b. In addition, the chamfered edges 340a are all disposed on one side of the coupling 310, while the chamfered edges 340b are all disposed on the opposite side of the coupling 310.

The first actuator 338a comprises a first actuator ring 346a for engaging the chamfered edges 340a, and a first piston 348a coupled to the first actuator ring 346a for axially moving the first actuator ring 346a towards and away from the slipper 314. Similarly, the second actuator 338b comprises a second actuator ring 346b for engaging the chamfered edges 340b, and a second piston 348b coupled to the second actuator ring 346b for axially moving the second actuator ring 346b towards and away from the slipper 314.

The four modes of operation of the coupling 310 will now be described. When the first and second pistons 348a, 348b are both inactive, the outer friction surface 336 of the race 316 engages the inner frictional surface 320a of the clockwise slipper segments 314a and the inner frictional surface 320b of the counterclockwise slipper segments 314b. As a result, the race 316 becomes locked to the clutch housing 312. When the first piston 348a is active but the second piston 348b inactive, the race 316 becomes freed from the clockwise slipper segments 314a but remains coupled to the counterclockwise slipper segments 314b. As a result, the race 316 is free to rotate in the clockwise direction only. When the first piston 348a is inactive but the second piston 348b active, the race 316 becomes freed from the counterclockwise slipper segments 314b but remains coupled to the clockwise slipper segments 314a. As a result, the race 316 is free to rotate in the counterclockwise direction only. When the first and second pistons 348a, 348b are both active, the race 316 becomes freed from the clockwise slipper segments 314a and the counterclockwise slipper segments 314b. As a result, the race 316 is free to rotate about the clutch housing 312 in both the clockwise direction and in the counterclockwise direction.

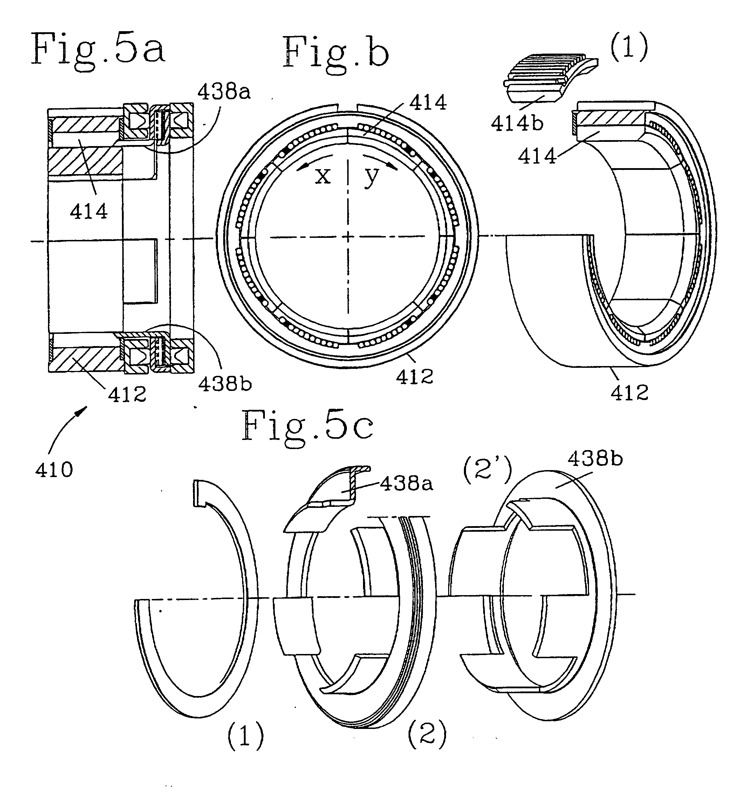

Figs. 5a, 5b and 5c show a quad-mode spiral-type coupling 410 substantially similar to the quad-mode spiral-type coupling 310 except that the slipper segments 414a, 414b are all chamfered on a common edge, and the first and second ring actuators 438a, 438b are both disposed on the same side edge of the slipper 414. The first actuator 438a is coupled to the clutch housing 412 and rotates therewith to maintain alignment with the slipper segments 414a, and the second actuator 438b is coupled to the clutch housing 412 and rotates therewith to maintain alignment with the slipper segments 414b.

Turning to Figs. 6a, 6b, 6c, a tri-mode spiral-type coupling 510 is shown similar to the quad-mode spiral-type coupling 410, but replacing the segmented inner slipper 414 with a chamfered segmented outer slipper 514 and including a single novel cam actuator 538 assembly in replacement of the pistons of the first and second ring actuators 438a, 438b. The cam actuator 538 comprises a cam plate 550 rotatably coupled to the clutch housing 512, a first cam follower 552a coupled between the cam plate 550 and the first actuator ring 546a, and a second cam follower 552b coupled between the cam plate 550 and the second actuator ring 546b. The cam actuator is provided with a plurality of first cam slots 554a for engaging the first cam follower 552a, and a plurality of second cam slots 554b for engaging the second cam follower 552b.

The three modes of operation of the coupling 510 will now be described. When the cam plate 550 is oriented in the position denoted by reference numeral 1 in Fig. 6b, the first cam follower 552a engages the first actuator ring 546a, causing the race 516 to be freed from the clockwise slipper segments 514a but to remain coupled to the counterclockwise slipper segments 514b. As a result, the race 516 is allowed to rotate in the clockwise direction only. When the cam plate 550 is oriented in the position denoted by reference numeral 2 in Fig. 6b, the second cam follower 552h engages the second actuator ring 546b, causing the race 516 to be freed from the counterclockwise slipper segments 514b but to remain coupled to the clockwise slipper segments 514a. As a result, the race 516 is allowed to rotate in the counterclockwise direction only. When the cam plate 550 is oriented in the position denoted by reference numeral 0 in Fig. 6b, neither of the first or second cam followers 552a, 552b engage the actuator rings 546, thereby causing the race 516 to remain coupled to the clockwise slipper segments 514a and the counterclockwise slipper segments 514b. As a result, the race 516 remains coupled to the clutch housing 512 in both directions. Other modes of operation can be made available by varying the relative shapes of the first and second cam slots 554a, 554b.

Turning now to Fig. 7, a four-wheel drive transfer case 600 is shown which embodies the inventive programmable couplings described above. The transfer case 600 comprises an input shaft 602, a rear wheel output shaft 604, a front wheel output shaft 606, and a torque transfer assembly 608 for transferring torque from the input shaft 602 to the front wheel output shaft 606 while allowing overrunning of the front wheel output shaft 606 independently of the direction of rotation of the input shaft 602. The torque transfer assembly 608 comprises an input disc 616 splined to the input shaft 602, a spiral-type two-way coupling 610 coupled to the input shaft 602, a first front wheel drive sprocket 666a coupled to the two-way coupling 610, a second front wheel drive sprocket 666b splined to the front wheel output shaft 606, and a chain 668 trained around the front wheel drive sprockets 666a, 666b.

The coupling 610 is similar to the tri-mode spiral-type coupling 510, and comprises a clutch body 612, and a slipper 614, with the input disc 616 acting as the race. The coupling 610 also includes a rotatable cam plate 650 coupled to the front wheel drive sprocket 666a through a friction plate 674, a first cam follower 652a coupled between the cam plate 650 and the clockwise slipper segments, and a second cam follower 652b coupled between the cam plate 650 and the counterclockwise slipper segments. The cam plate 650 is provided with a plurality of ball cams 654a, 654b for engaging the first and second cam followers 652a, 652b. However, unlike the coupling 510, the cam plate 650 only provides two modes of operation: clockwise freewheeling and counterclockwise freewheeling.

The transfer case 600 also includes an actuator 676 coupled to the cam plate 650 through an axially-movable yoke 678 for enabling or disabling four-wheel drive mode.

In operation, with the vehicle moving in a straight line, torque from the input shaft 602 is applied to the rear wheel output shaft 604, and to the front wheel output shaft 606 through the coupling 610. When the vehicle turns and the front wheels rotate faster than the rear wheels, the coupling 610 allows the slipper 612 to overrun the input disc 616 to allow the vehicle turn to be completed without rear wheel slippage.

Turning now to Fig. 8, an all-wheel drive transfer case 700 is shown which embodies the inventive programmable couplings described above. The transfer case 700 comprises an input shaft 702, a rear wheel output shaft 704, a front wheel output shaft (not shown), and a coplanar reverted gear train loop 706 coupled between the input shaft 702, the rear wheel output shaft 704 and the front wheel output shaft for splitting input torque between the rear wheel output shaft 704 and the front wheel output shaft. A spiral-type two-way coupling 710 is coupled between the input shaft 702 and the rear wheel output shaft 704 for allowing overrunning of the front wheel output shaft independently of the direction of rotation of the input shaft 702.

The coplanar reverted gear train loop 706 comprises an externally-toothed pinion 756, an eccentric cage 758 disposed around the pinion 756, and an internally-toothed annular gear 760 disposed around the cage 758 and being coplanar to the pinion 756 and the cage 758. The eccentric cage 758 comprises a ring gear 762 and an eccentric guide 764 for providing the ring gear 762 with an axis of rotation eccentric to that of the pinion 756 and the annular gear 760. The ring gear 762 has an external set of teeth which mesh with the internally-toothed annular gear 760, and an internal set of teeth which mesh with the externally-toothed pinion 756. The cage 758 is coupled to the rear wheel output shaft 704, and the annular gear 760 is coupled to the input shaft 702.

A first front wheel drive sprocket 766 is splined to the pinion 756, and a second front wheel drive sprocket (not shown) is splined to the front wheel output shaft. A chain is trained around the first front wheel drive sprocket 766 and the second front wheel drive sprocket for coupling the pinion 756 to the front wheel output shaft.

The spiral-type two-way coupling 710 is coupled to the extension 770 of the annular gear 760 and the extension 772 of the cage 758. The coupling 710 is substantially identical to the dual-mode spiral-type coupling 610, and comprises a rotatable cam plate 750 coupled to the front wheel drive sprocket 766 through a friction plate 774, a first cam follower 752a coupled between the cam plate 750 and the clockwise slipper segments, and a second cam follower 752b coupled between the cam plate 750 and the counterclockwise slipper segments. The transfer case 700 also includes an actuator 776 coupled to the cam plate 750 through an axially-movable yoke 778 for enabling or disabling all-wheel drive mode.

In operation, the coplanar reverted gear train loop 706 unequally splits the input torque from the input shaft 702 between the pinion 756 and the cage 758 in accordance with the ratio of the number of teeth on the pinion 756, the ring gear 762 and the annular gear 760. As a result, one of the output shafts is driven more actively than the other. However, the relative sizes of the first front wheel drive sprocket 766 and the second front wheel drive sprocket are such that the less actively driven output shaft is rotated more slowly than the other output shaft to allow the less actively driven output shaft to overrun up to a predetermined threshold.

In one implementation of the invention, the coplanar reverted gear train loop 706 directs 60% of the input torque to the rear wheel output shaft 704 and the remainder to the front wheel output shaft. However, the relative sizes of the first front wheel drive sprocket 766 and the second front wheel drive sprocket are such that the front wheel output shaft is rotated by the coplanar reverted gear train loop 706 about 15 - 20% slower than the rear wheel output shaft 704. Accordingly, when the vehicle enters a turn, or the front wheels lose traction, the front wheels will be allowed to rotate up to 15 - 20% faster than the rear wheels with the relative proportions of torque remaining the same. If the front wheels attempt to rotate at a greater relative rate, the coupling 710 will couple the annular gear 760 to the cage 758, thereby causing the coplanar reverted gear train loop 706 to rotate as a solid coupling and the differential rate of rotation to be limited to the 15 - 20% factor described above.

If vehicle direction is reversed, the rotatable cam plate 750 coupled to the front wheel drive sprocket 766 will select the opposite freewheeling mode of the coupling 710 to again allow the front wheels to rotate at up to 15 - 20% faster than the rear wheels before the coplanar reverted gear train loop 706 locks up.

The foregoing description of the preferred embodiment is intended to be illustrative of the present invention. Those of ordinary skill will be able to envisage certain additions, deletions and/or modifications to the described embodiments which, although not explicitly disclosed herein, are encompassed by the scope of the invention, as defined by the appended claims.

## Claims

1. A spiral-type coupling comprising:
a first coupling member (12) including a first bearing surface (18), the first bearing surface comprising at least one first clockwise-oriented spiral surface (18a; 18b)
a second coupling member (16) including a first friction surface (36);
a tubular slipper (14) disposed between the first (12) and second (16) coupling members, the slipper including a second friction surface (20) for engaging with the first friction surface (36), and a second bearing surface (22) coaxial to the first bearing surface (18), the second bearing surface (22) comprising a second clockwise-oriented spiral surface (22a; 22b) congruent with the first bearing surface (18), the first clockwise-oriented spiral surfaces (18a; 18b) together with the associated second clockwise-oriented spiral surfaces (22a; 22b) defining respective clockwise-oriented channels (28a; 28b) therebetween,
the first bearing surface (18;118;218) further comprising at least one first counterclockwise-oriented spiral surface (18b; 18a);
the second clockwise-oriented spiral surface (22b; 22a) being congruent with the first clockwise-oriented spiral surface (18a; 18b), a second counterclockwise-oriented spiral surface (22b; 22a) being congruent with at least one first counterclockwise-oriented spiral surface (18b; 18a),
the first counterclockwise-oriented spiral surfaces (18b; 18a) together with the associated second counterclockwise-oriented spiral surfaces (22b; 22a) defining respective counterclockwise-oriented channels (28b; 28a) therebetween, the clockwise-oriented channels (28a; 28b) being separate from the counterclockwise-oriented channels (28b; 28a),
roller elements (30) disposed in the channels (28a; 28b) for coupling the first coupling member (12) to the second coupling member (16) as the slipper (14) and the first coupling member (12) rotate relative to one another;
a resilient element (244) disposed in at least one of the channels for maintaining parallel alignment of the roller elements.

2. The spiral-type coupling according to claim 1, **characterized in that** the spiral surfaces (18a, 18b, 22a, 22b) comprise involute spiral surfaces.

3. The spiral-type coupling according to claim 1 or 2, **characterized in that** the slipper (14; 114; 214; 314; 414; 514) comprises a resilient tubular slipper including a slit (24,26) extending between the second friction surface (20; 220; 320) and the second bearing surface (22; 222) along a length of the slipper, and the coupling includes an actuator (438; 538) for axially moving the tubular slipper (14; 114; 214; 314; 414; 514) for controlling the coupling of the first coupling member (12; 212; 312; 412; 512; 612) to the second coupling member (16; 216; 316; 416; 516; 616).

4. The spiral-type coupling according to claim 3, **characterized in that** the slipper (214) is chamfered on an edge (240) thereof, and the actuator comprises an actuator ring (246) aligned with the chamfered edge (240) and a piston (248) coupled to the actuator ring (246) for axially engaging the chamfered edge (240).

5. The spiral-type coupling according to claim 1 or 2, **characterized in that** the slipper (114)comprises a plurality of slipper segments (114a, 114b; 214a, 214b; 314a, 314b), the second bearing surface (222; 322) of a first portion of the slipper segments (114a; 314a) comprising the second clockwise-oriented spiral surface, and the second bearing surface of a second portion of the slipper segments (114b; 314b) comprising the second counterclockwise-oriented spiral surface, and the coupling includes an actuator (238) for radially moving the slipper segments (114a, 114b; 214a, 214b; 314a, 314b)for controlling the coupling of the first coupling member (112; 212; 312) to the second coupling member (116; 216; 316).

6. The spiral-type coupling according to claim 5, **characterized in that** each said slipper segment (114a, 114b; 214a, 214b; 314a, 314b) is chamfered on an edge (240) thereof, and the actuator (238) comprises an actuator ring (246) aligned with the chamfered edges (240) and a piston (348) coupled to the actuator ring for axially engaging the chamfered edges.

7. The spiral-type coupling according to claim 5, **characterized in that** each said slipper segment (314a, 314b) is chamfered on an edge (340) thereof, and the actuator (338) comprises a first actuator ring (346a) aligned with the first portion chamfered edges (340a) and a first piston (348a) coupled to the first actuator ring (346a) for axially engaging the first portion chamfered edges (340a), and a second actuator ring (346b) aligned with the second portion chamfered edges (340b) and a second piston (348b) coupled to the second actuator ring (346b) for axially engaging the second portion chamfered edges (340b).

8. The spiral-type coupling according to claim 7, **characterized in that** the chamfered edges are disposed on a common side of the coupling.

9. The spiral-type coupling according to claim 7, **characterized in that** the first portion chamfered edges (340a) are disposed on one side of the coupling, and the second portion chamfered edges (340b) are disposed on an opposite side of the coupling.

10. The spiral-type coupling according to claim 5, **characterized in that** each said slipper segment is chamfered on an edge thereof with the chamfered edges being disposed on a common side of the coupling, and the actuator comprises a first actuator ring (438a) aligned with the first portion chamfered edges, a second actuator ring (438b) aligned with the second portion chamfered edges, and a rotatable cam plate (550) coupled to the actuator rings for selectively axially moving the actuator rings.

11. A spiral-type coupling according to claim 1, **characterized in that** the slipper (314) comprises a plurality of slipper segments (314a, 314b) chamfered on a respective edge (340a, 340b) thereof, the second bearing surface (322a) of a first portion of the slipper segments (320a) being coaxial to and congruent with the clockwise-oriented spiral surface (318a), and the second bearing surface (322b) of a second portion of the slipper segments (320b) being coaxial to and congruent with the counterclockwise-oriented spiral surface (318b), an actuator being (338) coupled to the chamfered edges (340a, 340b) for selectively engaging the second friction surface (320) with the first friction surface (336).

12. The spiral-type coupling according to claim 11, **characterized in that** the chamfered edges are disposed on a common side of the coupling, and the actuator comprises an actuator ring aligned with the chamfered edges and a piston coupled to the actuator ring for axially moving the actuator ring.

13. The spiral-type coupling according to claim 11, **characterized in that** the chamfered edges are disposed on a common side of the coupling, and the actuator comprises a first actuator ring (438a) aligned with the first portion chamfered edges (440a), a second actuator ring (438b) aligned with the second portion chamfered edges (440b), and a rotatable cam plate (550) coupled to the actuator rings (438a, 438b) for selectively axially moving the actuator rings.

14. The spiral-type coupling according to claim 11, **characterized in that** the cam plate (550) is configured for providing three coupling modes, the cam plate providing a first of the coupling modes by only axially moving the first actuator ring (546a), the cam plate providing a second of the coupling modes by only axially moving the second actuator ring (546b), the cam plate providing a third of the coupling modes by commonly axially positioning the first and second actuator rings (546a, 546b).

15. A spiral-type coupling according to claim 11, **characterized in that** a first actuator ring (546a) aligned with the chamfered edges (540a) of the first portion of the slipper segments (520a) for controlling engagement of the second friction surface (520) of the first portion with the first friction surface (536) for selectively allowing clockwise rotation between the coupling members; and **in that** a second actuator ring (546b) aligned with the chamfered edges (540b) of the second portion of the slipper segments (514b) for controlling engagement of the second friction surface (520b) of the second portion with the first friction surface (536) for selectively allowing counterclockwise rotation between the coupling members.

16. The spiral-type coupling according to claim 15, **characterized in that** the first portion chamfered edges and the second portion chamfered edges are disposed on a common side of the coupling.

17. The spiral-type coupling according to claim 15, **characterized in that** the first portion chamfered edges are disposed on one side of the coupling, and the second portion chamfered edges are disposed on an opposite side of the coupling.

18. A four-wheel drive transfer case comprising:
a torque input member (602);
a rear wheel torque output member (604) coupled to the torque input member
(602);
a front wheel torque output member (602);
a torque transfer assembly (608) for transferring torque from the torque input member (602) to the front wheel torque output member (606), the torque transfer assembly
comprising a spiral-type two-way coupling (610) according to any of claims 11 to 13, the two-way coupling being coupled between the torque input member (602) and the front wheel torque output member (606), with the actuator (676) being coupled to the torque input member (602) for allowing overrunning of the front wheel torque output member (606) independently of the direction of rotation of the torque input member (602).

19. An all-wheel drive transfer case comprising:
a torque input member (702);
a rear wheel torque output member (704);
a front wheel torque output member (766);
a reverted gear train loop (706) coupled to the torque input (702) for splitting input torque between the rear wheel torque output member (704) and the front wheel torque output member (766), one of the torque output members being driven less actively than the other torque output member; and
a spiral-type two-way coupling (710) according to any of claims 11 to 13, the two-way coupling being coupled between the torque input member (702) and one of the torque output members (704; 766), with the actuator (776) being coupled to the torque input member (702) for limiting overrunning of the less actively driven torque ouput member independently of the direction of rotation of the torque input member.

## Revendications

1. Accouplement de type à spirale comprenant :
un premier élément d'accouplement (12) comportant une première surface portante (18), cette première surface portante comprenant au moins une surface en spirale orientée dans le sens horaire (18a ; 18b) ;
un deuxième élément d'accouplement (16) comportant une première surface de frottement (36) ;
un patin tubulaire (14) disposé entre les premier (12) et deuxième (16) éléments d'accouplement, ce patin comportant une deuxième surface de frottement (20) pouvant venir en contact sur la première surface de frottement (36), et une deuxième surface portante (22) coaxiale avec la première surface portante (18), la deuxième surface portante (22) comprenant une deuxième surface en spirale orientée dans le sens horaire (22a ; 22b) homologue à la première surface portante (18), les premières surfaces en spirale orientées dans le sens horaire (18a ; 18b) définissant, avec les deuxièmes surfaces en spirale orientées dans le sens horaire (22a ; 22b) associées, des canaux respectifs entre celles-ci orientés dans le sens horaire (28a ; 28b),
la première surface portante (18 ; 118 ; 218) comprenant en outre au moins une première surface en spirale orientée dans le sens antihoraire (18b ; 18a) ;
la deuxième surface en spirale orientée dans le sens horaire (22b ; 22a) étant homologue à la première surface en spirale orientée dans le sens horaire (18a ; 18b), une deuxième surface en spirale orientée dans le sens antihoraire (22b ; 22a) étant homologue au moins une première surface en spirale orientée dans le sens antihoraire (18b ; 18a),
les premières surfaces en spirale orientées dans le sens antihoraire (18b ; 18a) définissant avec les deuxièmes surfaces en spirales orientées dans le sens antihoraire (22b ; 22a) des canaux respectifs entre celles-ci orientés dans le sens antihoraire (28b ; 28a), les canaux orientés dans le sens horaire (28a ; 28b) étant séparés des canaux orientés dans le sens antihoraire (28b ; 28a),
des éléments de galet (30) disposés dans les canaux (28a ; 28b) afin de coupler le premier élément d'accouplement (12) au deuxième élément d'accouplement (16) alors que le patin (14) et le premier élément d'accouplement (12) tournent l'un par rapport à l'autre ;
un élément élastique (244) disposé dans au moins l'un des canaux afin de maintenir l'alignement parallèle des éléments de galet.

2. Accouplement du type à spirale selon la revendication 1, **caractérisé en ce que** les surfaces en spirale (18a, 18b, 22a, 22b) comprennent des surfaces en développante.

3. Accouplement du type à spirale selon la revendication 1 ou 2, **caractérisé en ce que** le patin (14 ; 114 ; 214 ; 314 ; 414 ; 514) comprend un patin tubulaire élastique comportant une fente (24, 26) qui s'étend entre la deuxième surface de frottement (20 ; 220 ; 320) et la deuxième surface portante (22 ; 222) le long du patin, et l'accouplement comporte un actionneur (438 ; 538) permettant de déplacer axialement le patin tubulaire (14 ; 114 ; 214 ; 314 ; 414 ; 514) afin de commander l'accouplement du premier élément d'accouplement (12 ; 212 ; 312 ; 412 ; 512 ; 612) au deuxième élément d'accouplement (16 ; 216 ; 316 ; 416 ; 516 ; 616).

4. Accouplement du type en spirale selon la revendication 3, **caractérisé en ce que** le patin (214) a un bord chanfreiné (240), et l'actionneur comprend un anneau d'actionnement (246) aligné avec le bord chanfreiné (240) et un piston (248) couplé à l'anneau d'actionnement (246) afin de venir en contact, axialement, sur le bord chanfreiné (240).

5. Accouplement du type en spirale selon la revendication 1 ou 2, **caractérisé en ce que** le patin (114) comprend une pluralité de segments de patin (114a, 114b ; 214a, 214b ; 314a, 314b), la deuxième surface portante (222 ; 322) d'une première partie des segments de patin (114a ; 314a) comprenant la deuxième surface en spirale orientée dans le sens horaire, et la deuxième surface portante d'une deuxième partie des segments de patin (114b ; 314b) comprenant la deuxième surface en spirale orientée dans le sens antihoraire, et l'accouplement comporte un actionneur (238) permettant de déplacer radialement les segments de patins (114a, 114b ; 214a, 224b ; 314a, 314b) afin de commander l'accouplement du premier élément d'accouplement (112 ; 212 ; 312) au deuxième élément d'accouplement (116 ; 216 ; 316).

6. Accouplement du type à spirale selon la revendication 5, **caractérisé en ce que** chaque segment de patin (114a, 114b ; 214a, 214b ; 314a, 314b) a un bord chanfreiné (240), et l'actionneur (238) comprend un anneau d'actionnement (246) aligné avec les bords chanfreinés (240) et un piston (348) couplé à l'anneau d'actionnement afin de venir au contact, axialement, sur les bords chanfreinés.

7. Accouplement du type à spirale selon la revendication 5, **caractérisé en ce que** chaque segment de patin (314a, 314b) a un bord chanfreiné (340), et l'actionneur (338) comprend un premier anneau d'actionnement (346a) aligné avec les bords chanfreinés de la première partie (340a) et un premier piston (348a) couplé au premier anneau d'actionnement (346a) afin de s'engager, axialement, sur les bords chanfreinés de la première partie (340a), et un deuxième anneau d'actionnement (346b) aligné avec les bords chanfreinés de la deuxième partie (340b) et un deuxième piston (348b) couplé au deuxième anneau d'actionnement (346b) afin de venir au contact, axialement, sur les bords chanfreinés de la deuxième partie (340b).

8. Accouplement du type à spirale selon la revendication 7, **caractérisé en ce que** les bords chanfreinés sont disposés sur un côté commun de l'accouplement.

9. Accouplement du type à spirale selon la revendication 7, **caractérisé en ce que** les bords chanfreinés de la première partie (340a) sont disposés sur un côté de l'accouplement, et les bords chanfreinés de la deuxième partie (340b) sont disposés sur un côté opposé de l'accouplement.

10. Accouplement du type à spirale selon la revendication 5, **caractérisé en ce que** chaque dit segment de patin a un bord chanfreiné, les bords chanfreinés étant disposés sur un côté commun de l'accouplement, et l'actionneur comprend un premier anneau d'actionnement (438a) aligné avec les bords chanfreinés de la première partie, un deuxième anneau d'actionneur (438b) aligné avec les bords chanfreinés de la deuxième partie, et un plateau à cames rotatif (550) couplé aux anneaux d'actionnement afin de déplacer axialement, de manière sélective, les anneaux d'actionnement.

11. Accouplement du type à spirale selon la revendication 1, **caractérisé en ce que** le patin (314) comprend une pluralité de segments de patin (314a, 314b) ayant un bord chanfreiné respectif (340a, 340b), la deuxième surface portante (322a) d'une première partie des segments de patin (320a) étant coaxiale et homologue à la surface en spirale orientée dans le sens horaire (318a), et la deuxième surface portante (322a) d'une deuxième partie des segments de patin (320b) étant coaxiale et homologue à la surface en spirale orientée dans le sens horaire (318b), un actionneur étant (338) couplé aux bords chanfreinés (340a, 340b) afin de faire venir en contact, de manière sélective, la deuxième surface de frottement (320) avec la première surface de frottement (336).

12. Accouplement du type en spirale selon la revendication 11, **caractérisé en ce que** les bords chanfreinés sont disposés sur un côté commun de l'accouplement et l'actionneur comprend un anneau d'actionnement aligné avec les bords chanfreinés et un piston couplé à l'anneau d'actionnement afin de déplacer axialement l'anneau d'actionnement.

13. Accouplement du type en spirale selon la revendication 11, **caractérisé en ce que** les bords chanfreinés sont disposés sur un côté commun de l'accouplement, et l'actionneur comprend un premier anneau d'actionnement (438a) aligné avec les bords chanfreinés de la première partie (440a), un deuxième anneau d'actionnement (438b) aligné avec les bords chanfreinés de la deuxième partie (440b), et un plateau à came rotatif (550) couplé aux anneaux d'actionnement (438a, 438b) afin de déplacer, axialement, de façon sélective, les anneaux d'actionnement.

14. Accouplement du type en spirale selon la revendication 11, **caractérisé en ce que** le plateau à cames (550) est configuré pour fournir trois modes d'accouplement, ce plateau à cames fournissant un premier des modes d'accouplement en ne déplaçant axialement que le premier anneau d'actionnement (546a), ce plateau à cames fournissant un deuxième des modes d'accouplement en ne déplaçant axialement que le deuxième anneau d'actionnement (546b), ce plateau à cames fournissant un troisième des modes d'accouplement en positionnant axialement, en commun, les premier et deuxième anneaux d'actionneur (546a, 546b).

15. Accouplement du type en spirale selon la revendication 11, **caractérisé en ce qu'**un premier anneau d'actionnement (546a) est aligné avec les bords chanfreinés (540a) de la première partie des segments de patin (520a) afin de commander la coopération de la deuxième surface de frottement (520) de la première partie avec la première surface de frottement (536) pour permettre, de façon sélective, la rotation dans le sens horaire, entre les éléments d'accouplement ; et **en ce qu'**un deuxième anneau d'actionneur (546b) est aligné avec les bords chanfreinés (540b) de la deuxième partie des segments de patin (520b) afin de commander la coopération de la deuxième surface de frottement (520b) de la deuxième partie avec la première surface de frottement (536) pour permettre, de façon sélective, la rotation dans le sens antihoraire, entre les éléments d'accouplement.

16. Accouplement du type en spirale selon la revendication 15, **caractérisé en ce que** les bords chanfreinés de la première partie et les bords chanfreinés de la deuxième partie sont disposés sur un côté commun de l'accouplement.

17. Accouplement du type à spirale selon la revendication 15, **caractérisé en ce que** les bords chanfreinés de la première partie sont disposés sur un côté de l'accouplement et les bords chanfreinés de la deuxième partie sont disposés sur un côté opposé de l'accouplement.

18. Boîte de transfert à quatre roues motrices comprenant :
un élément d'entrée de couple (602) ;
un élément de sortie de couple vers les roues arrière (604) couplé à l'élément d'entrée de couple (602) ;
un élément de sortie de couple vers les roues avant (606) ;
un ensemble de transfert de couple (608) permettant de transférer le couple de l'élément d'entrée de couple (602) à l'élément de sortie de couple vers les roues avant (606), cet ensemble de transfert de couple comprenant un accouplement bidirectionnel du type spirale (610) selon l'une quelconque des revendications 11 à 13, l'accouplement bidirectionnel étant couplé entre l'élément d'entrée de couple (602) et l'élément de sortie de couple vers les roues avant (606), l'actionneur (676) étant couplé à l'élément d'entrée de couple (602) afin de permettre la surrotation de l'élément de sortie de couple vers les roues avant (606) indépendamment du sens de rotation de l'élément d'entrée de couple (602).

19. Boîte de transfert intégrale comprenant :
un élément d'entrée de couple (702) ;
un élément de sortie de couple vers les roues arrière (704) ;
un élément de sortie de couple vers les roues avant (766) ;
une boucle de train d'engrenages inversé (706) couplé à l'élément d'entrée de couple (702) afin de diviser le couple d'entrée entre l'élément de sortie de couple vers les roues arrière (704) et l'élément de sortie de couple vers les roues avant (766), l'un des éléments de sortie de couple étant moins activement entraîné que l'autre élément de sortie de couple ; et
un accouplement bidirectionnel du type à spirale (710) selon l'une quelconque des revendications 11 à 13, l'accouplement bidirectionnel étant couplé entre l'élément d'entrée de couple (702) et l'un des éléments de sortie de couple (704 ; 766), l'actionneur (776) étant couplé à l'élément d'entrée de couple (702) afin de limiter la surrotation de l'élément de sortie de couple moins activement entraîné, indépendamment du sens de rotation de l'élément d'entrée de couple.

## Patentansprüche

1. Spiral-Kupplung, die umfasst:
ein erstes Kupplungselement (12), das eine erste Lagerfläche (18) enthält, wobei die erste Lagerfläche wenigstens eine im Uhrzeigersinn ausgerichtete Spiralfläche (18a; 18b) umfasst,
ein zweites Kupplungselement (16), das eine erste Reibfläche (36) enthält;
ein röhrenförmiges Gleitteil (14), das zwischen dem ersten (12) und dem zweiten (16) Kupplungselement angeordnet ist, wobei das Gleitteil eine zweite Reibfläche (20), die mit der ersten Reibfläche (36) in Eingriff kommt, und eine zweite Lagerfläche (22) koaxial zu der ersten Lagerfläche (18) enthält, und die zweite Lagerfläche (22) eine zweite im Uhrzeigersinn ausgerichtete Spiralfläche (22a; 22b) kongruent zu der ersten Lagerfläche (18) umfasst, und die ersten im Uhrzeigersinn ausgerichteten Spiralflächen (18a; 18b) zusammen mit den dazugehörigen zweiten im Uhrzeigersinn ausgerichteten Spiralflächen (22a; 2b) entsprechende, im Uhrzeigersinn ausgerichtete Kanäle (28a; 28b) dazwischen bilden,
wobei die erste Lagerfläche (18; 118; 218) des Weiteren wenigstens eine erste entgegen dem Uhrzeigersinn ausgerichtete Spiralfläche (18b; 18a) umfasst,
die zweite im Uhrzeigersinn ausgerichtete Spiralfläche (22b; 2a) kongruent zu der ersten im Uhrzeigersinn ausgerichteten Spiralfläche (18a; 18b) ist, eine zweite entgegen dem Uhrzeigersinn ausgerichtete Spiralfläche (22b; 22a) kongruent zu wenigstens einer ersten entgegen dem Uhrzeigersinn ausgerichteten Spiralfläche (18b; 18a) ist,
die ersten entgegen dem Uhrzeigersinn ausgerichteten Spiralflächen (18b; 18a) zusammen mit den dazugehörigen zweiten entgegen dem Uhrzeigersinn ausgerichteten Spiralflächen (22b; 22a) entsprechende entgegen dem Uhrzeigersinn ausgerichtete Kanäle (28b; 28a) dazwischen bilden, und die im Uhrzeigersinn ausgerichteten Kanäle (28a; 28b) von den entgegen dem Uhrzeigersinn ausgerichteten Kanälen (28b; 28a) getrennt sind,
Walzenelemente (30) in den Kanälen (28a; 28b) angeordnet sind, um das erste Kupplungselement (12) mit dem zweiten Kupplungselement (16) zu kuppeln, wenn das Gleitteil (14) und das erste Kupplungselement (12) sich zueinander drehen,
ein federndes Element (244) in wenigstens einem der Kanäle angeordnet ist, um parallele Ausrichtung der Walzenelemente aufrechtzuerhalten.

2. Spiral-Kupplung nach Anspruch 1, **dadurch gekennzeichnet, dass** die Spiralflächen (18a, 18b, 22a, 22b) involventenförmige Spiralflächen umfassen.

3. Spiral-Kupplung nach Anspruch 1 oder 2, **dadurch gekennzeichnet, dass** das Gleitteil (14; 114; 214; 314; 414; 514) ein federndes röhrenförmiges Gleitteil umfasst, das einen Schlitz (24, 26) enthält, der sich zwischen der zweiten Reibfläche (20; 220; 320) und der zweiten Lagerfläche (22; 222) über eine Länge des Gleitteils erstreckt, und die Kupplung eine Betätigungselement (438; 538) enthält, das das röhrenförmige Gleitteil (14; 114; 214; 314; 414; 514) axial bewegt, um das Kuppeln des ersten Kupplungselementes (12; 212; 312; 412; 512; 612) mit dem zweiten Kupplungselement (16; 216; 316; 416; 516; 616) zu steuern.

4. Spiral-Kupplung nach Anspruch 3, **dadurch gekennzeichnet, dass** das Gleitteil (214) an einer Kante (240) abgeschrägt ist und das Betätigungselement einen Betätigungselement-Ring (246), der auf die abgeschrägte Kante (240) ausgerichtet ist, sowie einen Kolben (248) umfasst, der mit dem Betätigungselement-Ring (246) gekuppelt ist, um axial mit der abgeschrägten Kante (240) in Eingriff zu kommen.

5. Spiral-Kupplung nach Anspruch 1 oder 2, **dadurch gekennzeichnet, dass** das Gleitteil (114) eine Vielzahl von Gleitteil-Segmenten (114a, 114b; 214a, 214b; 314a, 314b) umfasst, wobei die zweite Lagerfläche (222; 322) eines ersten Teils der Gleitteil-Segmente (114a; 314a) die zweite im Uhrzeigersinn ausgerichtete Spiralfläche umfasst und die zweite Lagerfläche eines zweiten Teils der Gleitteil-Segmente (114b; 314b) die zweite entgegen dem Uhrzeigersinn gerichtete Spiralfläche umfasst und die Kupplung ein Betätigungselement (238) enthält, das die Gleitteil-Segmente (114a, 114b; 214a, 214b; 314a, 314b) axial bewegt, um das Kuppeln des ersten Kupplungselementes (112; 212; 312) mit dem zweiten Kupplungselement (116; 216; 316) zu steuern.

6. Spiral-Kupplung nach Anspruch 5, **dadurch gekennzeichnet, dass** jedes Gleitteil-Segment (114a, 114b; 214a, 214b; 314a, 314b) an einer Kante (240) abgeschrägt ist und das Betätigungselement (238) einen Betätigungselement-Ring (246), der auf die abgeschrägten Kanten (240) ausgerichtet ist, sowie einen Kolben (348) umfasst, der mit dem Betätigungselement-Ring gekuppelt ist, um axial mit den abgeschrägten Kanten in Eingriff zu kommen.

7. Spiral-Kupplung nach Anspruch 5, **dadurch gekennzeichnet, dass** jedes Gleitteil-Segment (314a, 314b) an einer Kante (340) abgeschrägt ist und das Betätigungselement (338) einen ersten Betätigungselement-Ring (346a), der auf die abgeschrägten Kanten (340a) des ersten Teils ausgerichtet ist, sowie einen ersten Kolben (348a), der mit dem ersten Betätigungselement-Ring (346a) gekuppelt ist, um axial mit den abgeschrägten Kanten (340a) des ersten Teils in Eingriff zu kommen, und einen zweiten Betätigungselement-Ring (346b), der auf die abgeschrägten Kanten (340b) des zweiten Teils ausgerichtet ist, sowie einen zweiten Kolben (348b) umfasst, der mit dem zweiten Betätigungselement-Ring (346b) gekuppelt ist, um axial mit den abgeschrägten Kanten (340b) des zweiten Teils in Eingriff zu kommen.

8. Spiral-Kupplung nach Anspruch 7, **dadurch gekennzeichnet, dass** die abgeschrägten Kanten an einer gemeinsamen Seite der Kupplung angeordnet sind.

9. Spiral-Kupplung nach Anspruch 7, **dadurch gekennzeichnet, dass** die abgeschrägten Kanten (340a) des ersten Teils an einer Seite der Kupplung angeordnet sind und die abgeschrägten Kanten (340b) des zweiten Teils an einer gegenüberliegenden Seite der Kupplung angeordnet sind.

10. Spiral-Kupplung nach Anspruch 5, **dadurch gekennzeichnet, dass** jedes Gleitteil-Segment an einer Kante abgeschrägt ist, wobei die abgeschrägten Kanten an einer gemeinsamen Seite der Kupplung angeordnet sind, und das Betätigungselement einen ersten Betätigungselement-Ring (438a), der auf die abgeschrägten Kanten des ersten Teils ausgerichtet ist, einen zweiten Betätigungselement-Ring (438b), der auf die abgeschrägten Kanten des zweiten Teils ausgerichtet ist, sowie eine drehbare Kurvenplatte (550) umfasst, die mit den Betätigungselement-Ringen gekuppelt ist, um die Betätigungselement-Ringe selektiv axial zu bewegen.

11. Spiral-Kupplung nach Anspruch 1, **dadurch gekennzeichnet, dass** das Gleitteil (314) eine Vielzahl von Gleitteil-Segmenten (314a, 314b) umfasst, die an einer entsprechenden Kante (340a, 340b) abgeschrägt sind, wobei die zweite Lagerfläche (322a) eines ersten Teils der Gleitteil-Segmente (320a) koaxial und kongruent zu der im Uhrzeigersinn ausgerichteten Spiralfläche (318a) ist und die zweite Lagerfläche (322b) eines zweiten Teils der Gleitteil-Segmente (320b) koaxial und kongruent zu der entgegen dem Uhrzeigersinn ausgerichteten Spiralfläche (318b) ist, wobei ein Betätigungselement (338) mit den abgeschrägten Kanten (340a, 340b) gekuppelt ist, um die zweite Reibungsfläche (320) mit der ersten Reibungsfläche (336) selektiv in Eingriff zu bringen.

12. Spiral-Kupplung nach Anspruch 11, **dadurch gekennzeichnet, dass** die abgeschrägten Kanten an einer gemeinsamen Seite der Kupplung angeordnet sind und das Betätigungselement einen Betätigungselement-Ring, der auf die abgeschrägten Kanten ausgerichtet ist, sowie einen Kolben umfasst, der mit dem Betätigungselement-Ring gekuppelt ist, um den Betätigungselement-Ring axial zu bewegen.

13. Spiral-Kupplung nach Anspruch 11, **dadurch gekennzeichnet, dass** die abgeschrägten Kanten an einer gemeinsamen Seite der Kupplung angeordnet sind und das Betätigungselement einen ersten Betätigungselement-Ring (438a), der auf die abgeschrägten Kanten (440a) des ersten Teils ausgerichtet ist, einen zweiten Betätigungselement-Ring (438b), der auf die abgeschrägten Kanten (440b) des zweiten Teils ausgerichtet ist, sowie eine drehbare Kurvenplatte (550) umfasst, die mit den Betätigungselement-Ringen (438a, 438b) gekuppelt ist, um die Betätigungselement-Ringe selektiv axial zu bewegen.

14. Spiral-Kupplung nach Anspruch 11, **dadurch gekennzeichnet, dass** die Kurvenplatte (550) so ausgeführt ist, dass sie drei Kupplungs-Betriebsarten ermöglicht, wobei die Kurvenplatte eine erste der Kupplungs-Betriebsarten ermöglicht, indem sie lediglich den ersten Betätigungselement-Ring (546a) axial bewegt, die Kurvenplatte eine zweite der Kupplungs-Betriebsarten ermöglicht, indem sie lediglich den zweiten Betätigungselement-Ring (546b) axial bewegt, und die Kurvenplatte eine dritte der Kupplungs-Betriebsarten ermöglicht, indem sie den ersten und den zweiten Betätigungselement-Ring (546a, 546b) gemeinsam axial positioniert.

15. Spiral-Kupplung nach Anspruch 11, **dadurch gekennzeichnet, dass** ein erster Betätigungselement-Ring (546a) auf die abgeschrägten Kanten (540a) des ersten Teils der Gleitteil-Segmente (520a) ausgerichtet ist, um Eingriff der zweiten Reibfläche (520) des ersten Teils mit der ersten Reibfläche (536a) zu steuern und selektiv Drehung im Uhrzeigersinn zwischen den Kupplungselementen zu ermöglichen, und dass ein zweiter Betätigungselement-Ring (546b) auf die abgeschrägten Kanten (540b) des zweiten Teils der Gleitteil-Segmente (514b) ausgerichtet ist, um Eingriff der zweiten Reibfläche (520b) des zweiten Teils mit der ersten Reibfläche (536) zu steuern und selektiv Drehung entgegen dem Uhrzeigersinn zwischen den Kupplungselementen zu ermöglichen.

16. Spiral-Kupplung nach Anspruch 15, **dadurch gekennzeichnet, dass** die abgeschrägten Kanten des ersten Teils und die abgeschrägten Kanten des zweiten Teils an einer gemeinsamen Seite der Kupplung angeordnet sind.

17. Spiral-Kupplung nach Anspruch 11, **dadurch gekennzeichnet, dass** die abgeschrägten Kanten des ersten Teils an einer Seite der Kupplung angeordnet sind und die abgeschrägten Kanten des zweiten Teils an einer gegenüberliegenden Seite der Kupplung angeordnet sind.

18. Vierradantriebs-Übertragungsgetriebe, das umfasst:
ein Drehmoment-Eingangselement (602);
ein Hinterraddrehmoment-Ausgangselement (604), das mit dem Drehmoment-Eingangselement (602) verbunden ist;
ein Vorderraddrehmoment-Ausgangselement (602);
eine Drehmomentübertragungs-Baugruppe (608), die Drehmoment von dem Drehmoment-Eingangselement (602) auf das Vorderraddrehmoment-Ausgangselement (606) überträgt, wobei die Drehmomentübertragungs-Baugruppe eine Spiral-Zweiweg-Kupplung (610) nach einem der Ansprüche 11 bis 13 umfasst, und die Zweiweg-Kupplung zwischen das Drehmoment-Eingangselement (602) und das Vorderraddrehmoment-Ausgangselement (606) gekuppelt ist und das Betätigungselement (676) mit dem Drehmoment-Eingangselement (602) gekuppelt ist, um Freilauf des Vorderraddrehmoment-Ausgangselementes (606) unabhängig von der Drehrichtung des Drehmoment-Eingangselementes (602) zu ermöglichen.

19. Allradantriebs-Übertragungsgetriebe, das umfasst:
ein Drehmoment-Eingangselement (702);
ein Hinterraddrehmoment-Ausgangselement (704);
ein Vorderraddrehmoment-Ausgangselement (766);
eine Umkehr-Räderzug-Schlaufe (706), die mit dem Drehmomenteingang (702) verbunden ist, um das Eingangsdrehmoment zwischen dem Hinterraddrehmoment-Ausgangselement (704) und dem Vorderraddrehmoment-Ausgangselement (766) zu verteilen, wobei eines der Drehmoment-Ausgangselemente weniger aktiv angetrieben wird als das andere Drehmoment-Ausgangselement; und
eine Spiral-Zweiweg-Kupplung (710) nach einem der Ansprüche 11 bis 13, wobei die Zweiweg-Kupplung zwischen das Drehmoment-Eingangselement (702) und eines der Drehmoment-Ausgangselemente (704; 766) gekuppelt ist und das Betätigungselement (776) mit dem Drehmoment-Eingangselement (702) verbunden ist, um Freilauf des weniger aktiv angetriebenen Drehmoment-Ausgangselementes unabhängig von der Drehrichtung des Drehmoment-Eingangselementes einzuschränken.
